# EUROPÄISCHE PATENTSCHRIFT

(11) **EP 4 503 709 B1**
(45) Veröffentlichungstag und Bekanntmachung des Hinweises auf die Patenterteilung: **29.04.2026**
(21) Anmeldenummer: 23188599.7
(22) Anmeldetag: 31.07.2023
(51) Int. Cl.: H04W 24/04, H04W 24/08

(54) **VERFAHREN UND SYSTEM ZUR BEHANDLUNG EINER STÖRUNG EINER MOBILFUNKVERBINDUNG IN EINEM MOBILFUNKNETZ**
METHOD AND SYSTEM FOR HANDLING A DISTURBANCE OF A MOBILE RADIO CONNECTION IN A MOBILE RADIO NETWORK
PROCÉDÉ ET SYSTÈME DE TRAITEMENT D'UNE DÉFAILLANCE D'UNE LIAISON RADIO MOBILE DANS UN RÉSEAU RADIO MOBILE

(43) Veröffentlichungstag der Anmeldung: 05.02.2025
(73) Patentinhaber: Deutsche Telekom AG, 53113 Bonn (DE)
(72) Erfinder: HAZER-YILMAZ, Filiz, 64297 Darmstadt (DE); WIDMANN, Florian, 70176 Stuttgart (DE); HENDRIKS, Jan, 53797 Lohmar (DE); GERKEN, Frank-Peter, 38444 Wolfsburg (DE)
(74) Vertreter: RDL Patentanwälte PartG mbB

(56) Entgegenhaltungen:
- EP-A1- 1 931 122
- US-A1- 2010 120 414
- US-A1- 2010 124 172
- US-A1- 2011 283 151

## Beschreibung

Die Erfindung betrifft ein Verfahren zur Behandlung einer Störung einer Mobilfunkverbindung in einem Mobilfunknetz. Die Erfindung betrifft ferner ein Telekommunikationssystem mit einem Mobilfunknetz zur Behandlung einer Störung einer Mobilfunkverbindung.

Obwohl heutige Telekommunikationssysteme im Allgemeinen sehr zuverlässig sind, kann es vorkommen, dass eine Mobilfunkverbindung, z. B. ein Telefongespräch, zwischen zwei Mobilgeräten, insbesondere Mobiltelefonen, vorzeitig abgebrochen wird.

In einem drahtlosen Telekommunikationssystem, wie z. B. einem Mobilfunksystem, werden aufgebaute Telefongespräche etwas häufiger abgebrochen als in einem drahtgebundenen System. Ein Grund für unterbrochene Telefongespräche ist, dass ein an dem Telefongespräch beteiligtes drahtloses Telefon (d. h. Mobiltelefon) einen Versorgungsbereich des Mobilfunknetzes verlassen hat. Bekanntlich sind Mobilfunksysteme in Funkzellen unterteilt, in denen eine Basisstation mit den in einer jeweiligen Funkzelle befindlichen Mobiltelefonen kommuniziert. Alle Funkzellen bilden zusammen den Versorgungsbereich des zellularen Mobilfunksystems. Wenn sich ein Mobiltelefon außerhalb des Versorgungsbereichs bewegt, geht der drahtlose Kommunikationskanal, d. h. der Funkkanal, zwischen dem Mobiltelefon und dem Mobilfunknetz verloren und das über den Kommunikationskanal aufgebaute bzw. geführte Telefongespräch wird abgebrochen.

Ein weiterer Grund, warum ein aufgebautes Telefongespräch in einem zellularen Mobilfunksystem abbrechen kann, ist das Weiterreichen (auch als Handover bezeichnet). Wenn ein Mobiltelefon von einer (augenblicklichen) Funkzelle in eine andere (neue) Funkzelle wechselt, wird das Telefongespräch von der Basisstation, die die augenblickliche Funkzelle bedient, an eine Basisstation, die die neue Funkzelle bedient, weitergereicht. In manchen Situationen kann es vorkommen, dass der Basisstation, die die neue Funkzelle bedient, zum Zeitpunkt der Weitergabe keine weiteren Funkkanäle für das weiterzureichende Telefongespräch des Mobiltelefons zur Verfügung stehen. In einem solchen Fall wird das aufgebaute Telefongespräch mit dem Mobiltelefon abgebrochen.

Ein noch weiterer Grund für unterbrochene Telefongespräche in einem Mobilfunksystem sind Versorgungslücken im Mobilfunknetz, d. h. Bereiche im geografischen Versorgungsgebiet, die keine Signale vom Mobilfunksystem empfangen (hierin auch als Funkloch bezeichnet). Solche Versorgungslücken können sowohl in Innen- als auch Außenbereichen auftreten. Wenn sich ein Mobiltelefon in ein Funkloch bewegt, in dem kein Empfang von Signalen möglich ist, geht der Funkkanal bzw. die Funkverbindung mit der jeweiligen Basisstation verloren und das Telefongespräch wird abgebrochen.

Unbeabsichtigt unterbrochene Telefongespräche sind für die Kommunikationspartner sehr unangenehm. Die Wiederherstellung des Telefongesprächs bleibt den Kommunikationspartnern überlassen. Die Situation des abgebrochenen Telefongesprächs wird dadurch verschlimmert, dass den Teilnehmern bzw. Kommunikationspartnern der Grund für das jeweils abgebrochene Telefongespräch nicht bekannt ist und sie deshalb auch nicht in entsprechender Weise reagieren können, um beispielsweise das Problem zu beheben. Diese abgebrochenen Telefongespräche führen häufig dazu, dass die Kommunikationspartner nicht vollständig miteinander kommunizieren können.

US2011/28315A1 offenbart ein Verfahren zur Behandlung einer Störung einer Mobilfunkverbindung in einem Mobilfunknetz zwischen einem mobilen Kommunikationsgerät und einem weiteren Kommunikationsgerät.

Vor diesem Hintergrund liegt der Erfindung die Aufgabe zugrunde, ein verbessertes Verfahren sowie ein verbessertes Telekommunikationssystem für die Behandlung einer Störung einer Mobilfunkverbindung in einem Mobilfunknetz bereitzustellen.

Diese Aufgabe wird durch ein Verfahren mit den Merkmalen des Anspruchs 1 sowie durch ein Telekommunikationssystem mit den Merkmalen des Anspruchs 10 gelöst. Weitere, besonders vorteilhafte Ausgestaltungen der Erfindung offenbaren die jeweiligen Unteransprüche.

Es sei angemerkt, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner angemerkt, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Gegenstand der Erfindung ist ein Verfahren zur Behandlung einer Störung einer Mobilfunkverbindung in einem Mobilfunknetz zwischen einem mobilen Kommunikationsgerät und einem weiteren Kommunikationsgerät.

Das weitere Kommunikationsgerät muss nicht zwingend ein mobiles Kommunikationsgerät sein. Es kann zum Beispiel ein stationäres Kommunikationsgerät sein, wie beispielsweise ein Internet-Server o. ä. Das weitere Kommunikationsgerät kann jedoch auch ein weiteres mobiles Kommunikationsgerät sein. In einem solchen Fall gelten alle hierin genannten Bezüge auf "das mobile Kommunikationsgerät" gleichermaßen auch für das oder die weiteren mobilen Kommunikationsgeräte.

Das erfindungsgemäße Verfahren sieht vor, dass eine Störung erkannt wird und nach dem Erkennen der Störung eine Ursache für die Störung ermittelt wird und dem mobilen Kommunikationsgerät eine Nachricht, in der die Störung und die Ursache der Störung mitgeteilt werden, gesendet wird und diese Nachricht von dem mobilen Kommunikationsgerät angezeigt wird. Insbesondere wird die Nachricht vorliegend automatisch und ohne Benutzereingriff zusammengestellt und versendet.

Mit anderen Worten wird die Störung erkannt, indem eine zeitnahe Auswertung (vorzugsweise in Echtzeit) von Daten von Netzwerkinfrastruktursystemen zu einer Verbindungsqualität und einem Verbindungsstatus der Mobilfunkverbindung durchgeführt wird. Die Anzeige der Nachricht kann optisch (z. B. mittels eines Displays) und/oder akustisch (z. B. mittels Sprachausgabe) erfolgen. Die Anzeige erfolgt bevorzugt automatisch und ohne Benutzereingriff.

Es ist zu verstehen, dass die Mobilfunkverbindung im Sinne der Erfindung nicht zwingend auf eine bereits zwischen den Kommunikationsgeräten bestehende Mobilfunkverbindung beschränkt ist. Als Mobilfunkverbindung im Sinne der Erfindung ist auch bereits ein Verbindungsaufbau zu verstehen, der bei einer vorhandenen Störung ohne Erfolg endet, d. h. die beabsichtigte Mobilfunkverbindung kommt zwischen den Kommunikationsgeräten nicht zustande.

Die Erfindung verbessert den Nutzungsgrad von Mobilfunkdiensten des Mobilfunknetzes, da einem Nutzer des mobilen Kommunikationsgeräts im Falle einer Störung der Mobilfunkverbindung nun wenigstens die Ursache der Störung bekannt ist. Der Nutzer ist damit in der Lage, ggfs. Maßnahmen gegen die vorliegende Störung zu ergreifen und anschließend die Mobilfunkverbindung zwischen den Kommunikationsgeräten fortzusetzen, so dass eine vollständige Kommunikation zwischen den Kommunikationspartnern ermöglicht wird. Lässt sich die Störung durch den Nutzer nicht allein beseitigen, so kann er anhand der mitgeteilten Ursache möglicherweise einen Zeitraum abschätzen, bis die Mobilfunkverbindung erneut aufgebaut werden kann, so dass auch in diesem Fall die Kommunikation zwischen den Kommunikationspartnern so früh wie möglich fortgesetzt und vollständig durchgeführt werden kann.

Die Erfindung schafft den Nutzern Klarheit, Transparenz und befähigt sie ggfs. zur Selbsthilfe, um die Störung zu beseitigen. Die Verfügbarkeit von Mobilfunkverbindungen im Mobilfunknetz wird erhöht.

Die Mobilfunkverbindung kann eine Sprachverbindung (z. B. ein Telefongespräch bzw. -verbindung) oder eine Datenverbindung (z. B. eine Internet-Verbindung) sein. Die Sprachverbindung kann zwischen dem mobilen Kommunikationsgerät (z. B. Mobiltelefon) und einem stationären Kommunikationsgerät (z. B. Festnetztelefon) oder einem weiteren mobilen Kommunikationsgerät (z. B. Mobiltelefon) stattfinden. Die Datenverbindung kann zwischen dem mobilen Kommunikationsgerät (z. B. Smartphone, Tablet, tragbaren Computer u. dgl.) und einem stationären Kommunikationsgerät (z. B. Server) oder ebenfalls mit einem weiteren mobilen Kommunikationsgerät (z. B. Smartphone, Tablet, tragbaren Computer o. ä.) stattfinden.

Die Störung kann ein Nichtzustandekommen der Mobilfunkverbindung zwischen den Kommunikationsgeräten, eine Unterbrechung einer bestehenden Mobilfunkverbindung zwischen den Kommunikationsgeräten und/oder eine Signalqualität der Mobilfunkverbindung zwischen den Kommunikationsgeräten bzw. zwischen den jeweiligen Kommunikationsgeräten und einer entsprechenden, an der Mobilfunkverbindung beteiligten Funkzelle sein, wobei die Signalqualität unterhalb eines vorbestimmbaren Grenzwerts liegt. Eine geringe Signalqualität macht sich bei Sprachverbindungen beispielsweise durch eine schlechte Verständlichkeit der Kommunikationspartner, bei Datenverbindungen durch eine niedrige Datenrate und/oder hohe Fehlerrate bei der Datenübertragung bemerkbar. Eine niedrige Datenrate kann beispielsweise durch eine Mobilfunkverbindung mit geringer Signalqualität aufgrund eines augenblicklichen Standorts des mobilen Kommunikationsgeräts und/oder durch eine hohe Datenlast in der aktuellen Funkzelle begründet sein. Die Störung wird erkannt, indem das Nichtzustandekommen der gewünschten Mobilfunkverbindung, die Unterbrechung der bestehenden Mobilfunkverbindung und/oder die unterhalb des vorbestimmten Grenzwerts liegende Signalqualität der Mobilfunkverbindung festgestellt wird.

Gemäß einer bevorzugten Ausführungsform wird die Nachricht in Form einer SMS (Short Message Service bzw. Kurznachrichtendienst) gesendet. Dieses Nachrichtenformat gewährleistet eine sichere und robuste Übertragung der Nachricht selbst unter Mobilfunkbedingungen, bei denen die Mobilfunkverbindung z. B. aufgrund einer schwachen Signalstärke bereits einer gewissen Beeinträchtigung unterliegt. Der Kurznachrichtendienst weist außerdem ein Übertragungsprotokoll mit einem geringen Overhead auf, so dass die Datenübertragung bzw. das Senden bzw. Übertragen der SMS aufgrund einer geringen Datenmenge in kürzester Zeit abgeschlossen ist. Besonders vorteilhaft ist zusätzlich, dass auf dem mobilen Kommunikationsgerät keine separate Software installiert werden muss, da der Kurznachrichtendienst gewöhnlich auf den das Mobilfunknetz nutzenden Kommunikationsgeräten ohnehin verfügbar ist.

In weiteren vorteilhaften Ausführungsformen wird eine Möglichkeit zur Behebung der Störung ermittelt, die zusätzlich in der Nachricht mitgeteilt wird. So wird der Nutzer des mobilen Kommunikationsgeräts noch besser in die Lage versetzt, die Störung selbst zu beseitigen, um die Mobilfunkverbindung so schnell wie möglich wieder herzustellen.

Gemäß einer weiteren Ausführungsform werden ein Standort des mobilen Kommunikationsgeräts, der Ursache der Störung ist, ermittelt und die Möglichkeit zur Behebung der Störung basierend auf dem ermittelten Standort ermittelt. Beispielsweise kann das mobile Kommunikationsgerät mittels des so genannten Verfahrens "Enhanced Observed Time Difference" (EOTD) innerhalb einer Funkzelle des Mobilfunknetzes netzseitig geortet werden. Liegt der ermittelte Standort zum Beispiel in einem Bereich unzureichender Signalqualität, kann dem Nutzer des mobilen Kommunikationsgeräts in der Nachricht mitgeteilt werden, dass eine höhere Signalqualität in einer bestimmten Entfernung vom aktuellen Standort erreicht werden kann, um die Störung der Mobilfunkverbindung zu beseitigen. Bei einer Datenverbindung kann anhand des aktuellen Standorts beispielsweise festgestellt werden, dass eine Funkzelle mit einer höheren Datenübertragungskapazität (z. B. LTE) in einer bestimmten Entfernung erreichbar ist, um die augenblickliche Störung der Mobilfunkverbindung (z. B. geringe Datenübertragungsrate) zu beseitigen.

Nach einer noch weiteren Ausführungsform wird eine voraussichtliche Dauer der Störung ermittelt, die zusätzlich in der Nachricht mitgeteilt wird. Kann die Störung nicht durch den Nutzer des mobilen Kommunikationsgeräts beseitigt werden, erfährt er auf diese Weise jedoch, ab wann voraussichtlich die Mobilfunkverbindung wieder ohne Störung hergestellt werden kann, so dass die Kommunikation zwischen den Kommunikationsgeräten so früh wie möglich fortgesetzt werden kann.

Zum Beispiel kann bei einem Standort des mobilen Kommunikationsgeräts, der Ursache der Störung ist (z. B. wegen eines Funklochs), eine Geschwindigkeit des mobilen Kommunikationsgeräts ermittelt werden, aus der sich die voraussichtliche Dauer der Störung (z. B. bis zum Verlassen des Funklochs) ermitteln lässt. Bei einer Mobilfunkverbindung zwischen zwei mobilen Kommunikationsgeräten kann die voraussichtliche Dauer der Störung, die durch eines der beiden mobilen Kommunikationsgeräte bedingt ist (z. B. Eintritt in ein Funkloch), dem anderen mobilen Kommunikationsgerät mitgeteilt werden. Die Geschwindigkeit kann aus Bewegungsdaten des mobilen Kommunikationsgeräts bestimmt werden, die z. B. mittels "Enhanced Observed Time Difference" (EOTD) vor dem beispielhaften Eintritt in ein Funkloch ermittelt wurden. In einem solchen Fall kann das voraussichtliche Verlassen des Funklochs anhand der Geschwindigkeit vorherbestimmt werden.

In weiteren Ausführungsformen wird die Ursache der Störung basierend auf wenigstens einer Information von einer an der Mobilfunkverbindung beteiligten Funkzelle ermittelt, wobei die Information eine augenblickliche Signalqualität der Mobilfunkverbindung zwischen der Funkzelle und dem mobilen Kommunikationsgerät, eine augenblickliche Datenlast der Funkzelle, eine Leistungseigenschaft der Funkzelle, ein augenblicklicher Standort des mobilen Kommunikationsgeräts und/oder ein Handover-Vorgang des mobilen Kommunikationsgeräts umfasst. Der aktuelle Standort des mobilen Kommunikationsgeräts kann beispielsweise in einem Randbereich des Versorgungsbereichs oder außerhalb des Versorgungsbereichs des Mobilfunknetzes liegen. Eine hohe Datenlast der Funkzelle kann zu einer Überlastung führen, die wiederum einen Abbruch der Mobilfunkverbindung oder eine erheblich reduzierte Datenübertragungsrate zur Folge haben kann. Eine Leistungseigenschaft der Funkzelle kann beispielsweise einen Mobilfunkstandard (z. B. 2G, 3G, 4G, 5G, LTE etc.) betreffen, durch den eine maximal mögliche Datenübertragungsrate einer Datenverbindung festgelegt ist. Ein geplantes Handover, das heißt eine geplante, bei einem Wechsel des mobilen Kommunikationsgeräts von einer Funkzelle in eine andere Funkzelle erfolgende Übergabe der Mobilfunkverbindung an die andere Funkzelle , kann beispielsweise zu dem Problem führen, dass die andere Funkzelle, die die Mobilfunkverbindung übernehmen soll, augenblicklich nicht über ausreichende Kommunikationskanäle verfügt und demnach das geplante Handover nicht ausgeführt werden kann, so dass die Mobilfunkverbindung aus diesem Grund abgebrochen werden muss.

Gemäß einer weiteren Ausführungsform wird die Störung von einer einem Backbone des Mobilfunknetzes zugeordneten Steuereinheit behandelt. Mit anderen Worten wird die Behandlung der Störung als Dienst im Backbone des Mobilfunknetzes automatisch und ohne Benutzereingriff bereitgestellt. Eine zusätzliche Bereitstellung und Installation einer speziellen Anwendungssoftware auf den Kommunikationsgeräten ist nicht erforderlich. Im Backbone sind zudem die für die erfindungsgemäße Behandlung der Störung benötigten Informationen zentral verfügbar und leicht zugänglich. Der Backbone des Mobilfunknetzes kann als die zentrale Netzwerkverbindung des gesamten Mobilfunknetzes verstanden werden. Die Steuereinheit kann beispielsweise ein Server sein, der die Netzwerkverbindungen des Mobilfunknetzes zentral steuert.

Ferner ist Gegenstand der Erfindung ein Telekommunikationssystem mit einem Mobilfunknetz, einem mobilen Kommunikationsgerät und einem weiteren Kommunikationsgerät und einer Steuereinheit, wobei die Steuereinheit eingerichtet ist, ein Verfahren nach einer der hierin offenbarten Ausführungsformen auszuführen, das heißt wenigstens eine Störung einer Mobilfunkverbindung zwischen den Kommunikationsgeräten zu erkennen, eine Ursache für die Störung zu ermitteln und zumindest einem der wenigstens zwei Kommunikationsgeräte eine Nachricht zu senden, in der die Störung und die Ursache der Störung mitgeteilt werden.

Es ist zu verstehen, dass bezüglich systembezogener Begriffsdefinitionen sowie der Wirkungen und Vorteile systemgemäßer Merkmale vollumfänglich auf die Offenbarung sinngemäßer Definitionen, Wirkungen und Vorteile des erfindungsgemäßen Verfahrens zurückgegriffen werden kann und umgekehrt. Auf eine Wiederholung von Erläuterungen sinngemäß gleicher Merkmale, deren Wirkungen und Vorteile kann somit zugunsten einer kompakteren Beschreibung verzichtet werden, ohne dass derartige Auslassungen als Einschränkung für einen der offenbarten Erfindungsgegenstände auszulegen wären.

Gemäß einer Ausführungsform ist die Steuereinheit einem Backbone des Mobilfunknetzes zugeordnet. Das heißt, die Störung wird ohne Benutzereingriff automatisch vom Mobilfunknetz behandelt. Der Backbone erlaubt einen zentralen Zugriff auf alle erforderlichen Informationen zur Behandlung der Störung.

In weiteren Ausführungsformen ist das weitere Kommunikationsgerät ein weiteres mobiles Kommunikationsgerät. In diesem Fall betrifft die Mobilfunkverbindung eine Mobilfunkverbindung zwischen wenigstens zwei unterschiedlichen mobilen Kommunikationsgeräten.

Weitere Merkmale und Vorteile der Erfindung ergeben sich aus der folgenden Beschreibung eines nicht einschränkend zu verstehenden Ausführungsbeispiels der Erfindung, das im Folgenden unter Bezugnahme auf die Zeichnung näher erläutert wird.

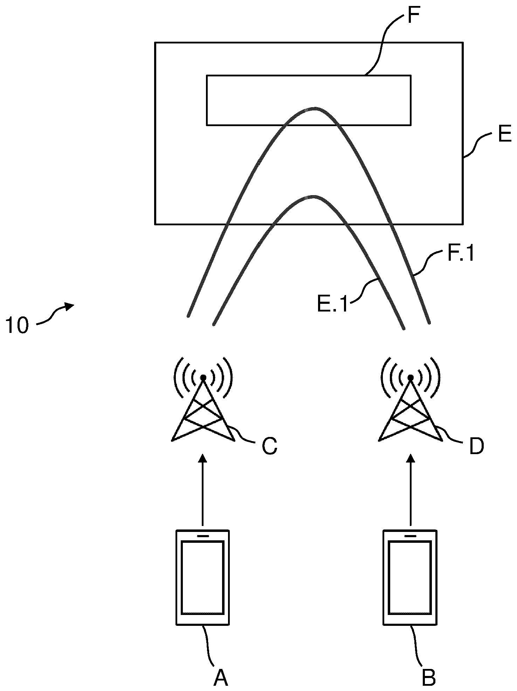

In dieser Zeichnung zeigt die einzige Figur 1 schematisch ein Telekommunikationssystem 10 nach einer Ausführungsform der Erfindung. Anhand dieser Darstellung wird ebenfalls ein Verfahren zur Behandlung einer Störung einer Mobilfunkverbindung in einem Mobilfunknetz nach einer Ausführungsform der Erfindung erläutert.

Figur 1 sind zwei mobile Kommunikationsgeräte A und B (vorliegend zwei Mobilfunktelefone oder Smartphones) zu entnehmen, die jeweils einem nicht dargestellten Nutzer der Kommunikationsgeräte A bzw. B zugeordnet sind. Die Erfindung ist jedoch nicht zwingend auf zwei mobile Kommunikationsgeräte beschränkt. Eines der Kommunikationsgeräte kann ein mobiles Kommunikationsgerät sein, ein anderes hingegen ein stationäres Kommunikationsgerät (nicht dargestellt).

Das Kommunikationsgerät A ist mit einem Mobilfunkmast C einer ersten Funkzelle des Mobilfunknetzes verbunden. Das Kommunikationsgerät B ist mit einem Mobilfunkmast D einer zweiten Funkzelle des Mobilfunknetzes verbunden. Die erste Funkzelle und die zweite Funkzelle können unterschiedliche Funkzellen des Mobilfunknetzes sein wie vorliegend dargestellt. Der erste Mobilfunkmast C versorgt die erste Funkzelle und der zweite Mobilfunkmast D versorgt die zweite Funkzelle. Die Erfindung ist jedoch nicht zwingend auf zwei unterschiedliche Funkzellen beschränkt, so dass sich die Kommunikationsgeräte, zwischen denen eine Mobilfunkverbindung besteht, auch in derselben Funkzelle befinden können.

Im vorliegend dargestellten Beispiel ruft der Nutzer des Kommunikationsgeräts A den Nutzer des Kommunikationsgeräts B an. Eine Mobilfunkverbindung E.1 zwischen den Kommunikationsgeräten A und B ist daher vorliegend beispielhaft eine Sprachverbindung, ohne jedoch zwingend auf Sprachverbindungen beschränkt zu sein. Die Mobilfunkverbindung E.1 könnte ebenso eine Datenverbindung zwischen den Kommunikationsgeräten A und B sein.

Ein Backbone E des Mobilfunknetzes stellt die Mobilfunkverbindung E.1 zwischen den beiden Mobilfunkmasten C und D bzw. den beiden Kommunikationsgeräten A und B her, so dass die Nutzer der jeweiligen Kommunikationsgeräte A und B miteinander telefonieren können.

Beispielhaft verschlechtert sich die Signalqualität bzw. Mobilfunkverbindung des Kommunikationsgeräts B mit der ihm zugeordneten Funkzelle oder bricht kurzzeitig ab. Eine Störung der Mobilfunkverbindung E.1 zwischen den Kommunikationsgeräten A und B liegt vor, die zum Beispiel anhand der sich verschlechternden Signalqualität, die unterhalb eines vorbestimmten Grenzwerts liegt, und/oder anhand der Unterbrechung der Mobilfunkverbindung erkannt wird. Diese kann verschiedene Gründe haben, z. B. eine Überlastung der zugeordneten Funkzelle oder das Kommunikationsgerät B befindet sich in einem Randbereich des Versorgungsbereichs des Mobilfunkbereichs bzw. der augenblicklich zugeordneten Funkzelle.

Dem Backbone E des Mobilfunknetzes ist eine Steuereinheit F zugeordnet, die eingerichtet ist, ein Verfahren nach einer der hierin offenbarten Ausführungsformen auszuführen. Die Steuereinheit F stellt einen netzinternen Dienst zur Behandlung einer Störung der Mobilfunkverbindung E.1 in dem Mobilfunknetz zwischen dem mobilen Kommunikationsgerät A und dem weiteren mobilen Kommunikationsgerät B bereit, der auf dem Backbone E des Mobilfunknetzes ausgeführt wird. Im Backbone E wird in Echtzeit beispielsweise unter Zuhilfenahme des EOTD-Verfahrens ("Enhanced Observed Time Difference") die schlechte Mobilfunkverbindung E.1 erkannt. Anhand verfügbarer Funkzellen-Informationen, z. B. Signalqualität zwischen dem mobilen Kommunikationsgerät B und der zugeordneten zweiten Funkzelle, Datenlast der zweiten Funkzelle, Standort des mobilen Kommunikationsgeräts B relativ zum Mobilfunkmast D, Handover des Kommunikationsgeräts B in oder aus der zweiten Funkzelle, wird die Ursache der Störung ermittelt.

Die Nutzer der jeweiligen Kommunikationsgeräte A und B werden mittels einer Nachricht F.1 (vorliegend eine SMS), in der wenigstens die Störung und die Ursache der Störung mitgeteilt werden, während der aktiven Mobilfunkverbindung E.1 informiert. Bei einem vollständigen Abbruch der Mobilfunkverbindung E.1 kann ausschließlich das mobile Kommunikationsgerät A informiert werden, dass die Ursache des Verbindungsproblems (d. h. die Störung der Mobilfunkverbindung) bei dem Kommunikationsgerät B liegt.

In jedem Fall zeigt das Kommunikationsgerät A oder beide Kommunikationsgeräte A und B die von der Steuereinheit F erhaltene Nachricht F.1, vorzugsweise automatisch, dem jeweiligen Nutzer, bspw. mittels eines Displays optisch und/oder mittels eines Audioausgangs, bspw. eines Lautsprechers, akustisch an.

### BEZUGSZEICHENLISTE:

- 10: Telekommunikationssystem

- A: Mobiles Kommunikationsgerät
- B: Mobiles Kommunikationsgerät
- C: Mobilfunkmast
- D: Mobilfunkmast
- E: Backbone
- E.1: Mobilfunkverbindung
- F: Steuereinheit
- F.1: Nachricht

## Patentansprüche

1. Verfahren zur Behandlung einer Störung einer Mobilfunkverbindung (E.1) in einem Mobilfunknetz zwischen einem mobilen Kommunikationsgerät (A) und einem weiteren Kommunikationsgerät (B), wobei bei dem Verfahren die Störung erkannt wird und nach dem Erkennen der Störung eine Ursache für die Störung ermittelt wird und dem mobilen Kommunikationsgerät (A, B) eine Nachricht (F.1), in der die Störung und die Ursache der Störung mitgeteilt werden, gesendet wird und diese Nachricht (F.1) von dem mobilen Kommunikationsgerät (A, B) angezeigt wird,
**dadurch gekennzeichnet, dass**
eine Möglichkeit zur Behebung der Störung ermittelt wird, die zusätzlich in der Nachricht (F.1) mitgeteilt wird.

2. Verfahren nach Anspruch 1, bei dem die Nachricht (F.1) in Form einer SMS gesendet wird.

3. Verfahren nach Anspruch 1 oder 2, bei dem die Mobilfunkverbindung (E.1) eine Sprachverbindung oder eine Datenverbindung ist.

4. Verfahren nach Anspruch 1, bei dem ein Standort des mobilen Kommunikationsgeräts (A, B), der Ursache der Störung ist, ermittelt wird und die Möglichkeit zur Behebung der Störung basierend auf dem ermittelten Standort ermittelt wird.

5. Verfahren nach einem der vorhergehenden Ansprüche, bei dem eine voraussichtliche Dauer der Störung ermittelt wird, die zusätzlich in der Nachricht (F.1) mitgeteilt wird.

6. Verfahren nach Anspruch 5, bei dem eine Geschwindigkeit des mobilen Kommunikationsgeräts (A, B), dessen Standort Ursache der Störung ist, ermittelt wird und die voraussichtliche Dauer der Störung basierend auf der ermittelten Geschwindigkeit ermittelt wird.

7. Verfahren nach einem der vorhergehenden Ansprüche, bei dem die Störung ein Nichtzustandekommen der Mobilfunkverbindung (E.1), eine Unterbrechung einer bestehenden Mobilfunkverbindung (E.1) und/oder eine Signalqualität der Mobilfunkverbindung (E.1) unterhalb eines vorbestimmbaren Grenzwerts ist.

8. Verfahren einem der vorhergehenden Ansprüche, bei dem die Ursache der Störung basierend auf wenigstens einer Information von einer an der Mobilfunkverbindung (E.1) beteiligten Funkzelle ermittelt wird, wobei die Information eine augenblickliche Signalqualität der Mobilfunkverbindung (E.1) zwischen der Funkzelle und dem mobilen Kommunikationsgerät (A, B), eine augenblickliche Datenlast der Funkzelle, eine Leistungseigenschaft der Funkzelle, ein augenblicklicher Standort des mobilen Kommunikationsgeräts (A, B) und/oder ein Handover-Vorgang des mobilen Kommunikationsgeräts (A, B) umfasst.

9. Verfahren nach einem der vorhergehenden Ansprüche, bei dem die Störung von einer einem Backbone (E) des Mobilfunknetzes zugeordneten Steuereinheit (F) behandelt wird.

10. Telekommunikationssystem (10) mit einem Mobilfunknetz, einem mobilen Kommunikationsgerät (A) und einem weiteren Kommunikationsgerät (B) und einer Steuereinheit (F), wobei die Steuereinheit (F) eingerichtet ist, wenigstens eine Störung einer Mobilfunkverbindung (E.1) zwischen den Kommunikationsgeräten (A, B) zu erkennen, eine Ursache für die Störung zu ermitteln und zumindest einem der wenigstens zwei Kommunikationsgeräte (A, B) eine Nachricht (F.1) zu senden, in der die Störung und die Ursache der Störung mitgeteilt werden,
**dadurch gekennzeichnet, dass**
die Steuereinheit (F) ferner dazu eingerichtet ist, eine Möglichkeit zur Behebung der Störung zu ermitteln, die zusätzlich in der Nachricht (F.1) mitgeteilt wird.

11. Telekommunikationssystem nach Anspruch 10, bei dem die Steuereinheit (F) einem Backbone (E) des Mobilfunknetzes zugeordnet ist.

12. Telekommunikationssystem nach Anspruch 10 oder 11, bei dem das weitere Kommunikationsgerät (B) ein weiteres mobiles Kommunikationsgerät ist.

## Claims

1. A method for handling a disturbance of a mobile radio connection (E. 1) in a mobile radio network between a mobile communication device (A) and a further communication device (B), wherein in the method the disturbance is detected and after the detection of the disturbance, a cause of the disturbance is determined and a message (F.1) in which the disturbance and the cause of the disturbance are communicated is sent to the mobile communication device (A, B) and this message (F.1) is displayed by the mobile communication device (A, B),
**characterized in that**
an option for remedying the disruption is determined, which option is additionally communicated in the message (F.1).

2. The method according to claim 1, in which the message (F.1) is sent in the form of an SMS.

3. The method according to claim 1 or 2, in which the mobile radio connection (E.1) is a voice connection or a data connection.

4. The method according to claim 1, in which a location of the mobile communication device (A, B), which location is the cause of the disturbance, is determined and the option for remedying the disturbance is determined based on the determined location.

5. The method according to any of the preceding claims, in which an expected duration of the disturbance is determined, which duration is additionally communicated in the message (F.1).

6. The method according to claim 5, in which a speed of the mobile communication device (A, B) whose location is the cause of the disturbance is determined and the expected duration of the disturbance is determined based on the determined speed.

7. The method according to any of the preceding claims, in which the disturbance is a non-establishment of the mobile radio connection (E.1), an interruption of an existing mobile radio connection (E.1) and/or a signal quality of the mobile radio connection (E.1), which signal quality is below a predeterminable limit value.

8. The method according to any of the preceding claims, in which the cause of the disturbance is determined based on at least one piece of information from a radio cell participating in the mobile radio connection (E.1), wherein the information comprises an instantaneous signal quality of the mobile radio connection (E.1) between the radio cell and the mobile communication device (A, B), an instantaneous data load of the radio cell, a power characteristic of the radio cell, an instantaneous location of the mobile communication device (A, B) and/or a handover operation of the mobile communication device (A, B).

9. The method according to any of the preceding claims, in which the disturbance is handled by a control unit (F) assigned to a backbone (E) of the mobile radio network.

10. A telecommunication system (10) comprising a mobile radio network, a mobile communication device (A) and a further communication device (B) and a control unit (F), wherein the control unit (F) is configured to detect at least one disturbance of a mobile radio connection (E.1) between the communication devices (A, B), to determine a cause of the disturbance and to send a message (F.1) to at least one of the at least two communication devices (A, B), in which the disturbance and the cause of the disturbance are communicated,
**characterized in that**
the control unit (F) is further configured to determine an option for remedying the disturbance, which option is additionally communicated in the message (F.1).

11. The telecommunication system according to claim 10, in which the control unit (F) is assigned to a backbone (E) of the mobile radio network.

12. The telecommunication system according to claim 10 or 11, in which the further communication device (B) is a further mobile communication device.

## Revendications

1. Procédé de traitement d'une défaillance d'une liaison radio mobile (E.1) dans un réseau radio mobile entre un appareil de communication mobile (A) et un autre appareil de communication (B), le procédé permettant de détecter la défaillance et, après détection de la défaillance, d'en déterminer la cause, puis d'envoyer à l'appareil de communication mobile (A, B) un message (F.1) indiquant la défaillance et sa cause, ce message (F.1) étant affiché par l'appareil de communication mobile (A, B),
**caractérisé en ce**
**qu'**un moyen de remédier à la défaillance est déterminé et également communiqué dans le message (F.1).

2. Procédé selon la revendication 1, le message (F.1) étant envoyé sous la forme d'un SMS.

3. Procédé selon la revendication 1 ou 2, la liaison radio mobile (E.1) étant une liaison vocale ou une liaison de données.

4. Procédé selon la revendication 1, permettant de déterminer une position de l'appareil de communication mobile (A, B) à l'origine de la défaillance et le moyen d'y remédier sur la base de la position déterminée.

5. Procédé selon l'une des revendications précédentes, permettant de déterminer une durée probable de la défaillance, qui est également communiquée dans le message (F.1).

6. Procédé selon la revendication 5, permettant de déterminer une vitesse de l'appareil de communication mobile (A, B) dont la position est à l'origine de la défaillance et la durée probable de la défaillance sur la base de la vitesse déterminée.

7. Procédé selon l'une des revendications précédentes, la défaillance étant un échec de liaison radio mobile (E.1), une interruption d'une liaison radio mobile (E.1) existante et/ou une qualité du signal de la liaison radio mobile (E.1) inférieure à une valeur limite prédéfinie.

8. Procédé selon l'une des revendications précédentes, la cause de la défaillance étant déterminée sur la base d'au moins une information provenant d'une cellule radio impliquée dans la liaison radio mobile (E.1), l'information comprenant une qualité du signal instantanée de la liaison radio mobile (E.1) entre la cellule radio et l'appareil de communication mobile (A, B), une charge de données instantanée de la cellule radio, une caractéristique de performance de la cellule radio, une position instantané de l'appareil de communication mobile (A, B) et/ou un processus de transfert de l'appareil de communication mobile (A, B).

9. Procédé selon l'une des revendications précédentes, la défaillance étant traitée par une unité de commande (F) associée à une dorsale (E) du réseau radio mobile.

10. Système de télécommunication (10) composé d'un réseau radio mobile, d'un appareil de communication mobile (A) et d'un autre appareil de communication (B) ainsi que d'une unité de commande (F), l'unité de commande (F) étant conçue pour détecter au moins une défaillance d'une liaison radio mobile (E.1) entre les appareils de communication (A, B), déterminer la cause de la défaillance et envoyer à au moins l'un des au moins deux appareils de communication (A, B) un message (F.1) indiquant la défaillance et la cause de celle-ci,
**caractérisé en ce que**
l'unité de commande (F) est en outre conçue pour déterminer un moyen de remédier à la défaillance, lequel est également communiqué dans le message (F.1).

11. Système de télécommunication selon la revendication 10, l'unité de commande (F) étant associée à une dorsale (E) du réseau radio mobile.

12. Système de télécommunication selon la revendication 10 ou 11, l'autre appareil de communication (B) étant un autre appareil de communication mobile.
